# EUROPEAN PATENT APPLICATION

(11) **EP 4 804 488 A1**
(43) Date of publication of application: **09.09.2026**
(21) Application number: 24884767.5
(22) Date of filing: 29.10.2024
(51) Int. Cl.: H04L 51/10, H04N 21/472, G06F 9/451

(54) **INTERACTION INFORMATION SENDING METHOD AND APPARATUS, ELECTRONIC DEVICE, AND STORAGE MEDIUM**

(30) Priority: 30.10.2023 CN 202311425729
(71) Applicant: Beijing Zitiao Network Technology Co., Ltd., Beijing 100190 (CN)
(72) Inventor: LIU, Fujia, Beijing 100028 (CN); WANG, Xin, Beijing 100028 (CN)
(74) Representative: Grünecker Patent- und Rechtsanwälte PartG mbB
(86) International application number: PCT/CN2024/128299
(87) International publication number: WO 2025/092765

(57) **Abstract**

Embodiment of the disclosure provides a method and apparatus for sending interaction information, an electronic device and a storage medium. The method includes: generating a target object in response to an object generation operation performed within a first preset interface; displaying, in a first media content display interface, first object information of the target object; and sending target interaction information for a target media content in response to an information sending operation for the target object, where the target media content is media content currently displayed in the first media content display interface, and the target interaction information includes second object information of the target object.

## Description

This application claims the benefit of Chinese Patent Application No. 202311425729.9, filed on October 30, 2023, entitled "METHOD, APPARATUS, ELECTRONIC DEVICE AND STORAGE MEDIUM FOR SENDING INTERACTION INFORMATION", the entire contents of which are incorporated herein by reference.

### FIELD

Embodiments of the present disclosure relate to the field of computer technology, and more particularly, to a method, apparatus, electronic device and storage medium for sending interaction information.

### BACKGROUND

At present, in some applications, users may comment on their viewed media content. However, the current manner for commenting is relatively simplistic, and the required operations are cumbersome.

### SUMMARY

Embodiments of the present disclosure provide a method, apparatus, electronic device and storage medium for sending interaction information.

In a first aspect, an embodiment of the present disclosure provides a method for sending interaction information, including: generating a target object in response to an object generation operation performed within a first preset interface; displaying, in a first media content display interface, first object information of the target object; and sending target interaction information for a target media content in response to an information sending operation for the target object, where the target media content is media content currently displayed in the first media content display interface, and the target interaction information includes second object information of the target object.

In a second aspect, an embodiment of the present disclosure provides an apparatus for sending interaction information, including: an object generation module configured to generate a target object in response to an object generation operation performed within a first preset interface; an information display module configured to display, in a first media content display interface, first object information of the target object; and an information sending module configured to send target interaction information for a target media content in response to an information sending operation for the target object, where the target media content is media content currently displayed in the first media content display interface, and the target interaction information includes second object information of the target object.

In a third aspect, an embodiment of the present disclosure provides an electronic device, including: one or more processors; and a memory configured to store one or more programs, where the one or more programs, when executed by the one or more processors, causing the one or more processors to perform the method for sending interaction information according to the embodiments of the present disclosure.

In a fourth aspect, an embodiment of the present disclosure provides a computer-readable storage medium storing a computer program, where the program, when executed by a processor, causing the method for sending interaction information according to the embodiments of the present disclosure to be performed.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and elements and elements are not necessarily drawn to scale.
FIG. 1 is a schematic flowchart of a method for sending interaction information according to an embodiment of the present disclosure;
FIG. 2 is a schematic diagram illustrating display of first object information according to an embodiment of the present disclosure;
FIG. 3 is a schematic diagram illustrating display of second object information according to an embodiment of the present disclosure;
FIG. 4 is a schematic diagram illustrating target interaction information according to an embodiment of the present disclosure;
FIG. 5 is a schematic diagram illustrating further target interaction information according to an embodiment of the present disclosure;
FIG. 6 is a schematic flowchart of a method for sending interaction information according to a further embodiment of the present disclosure;
FIG. 7 is a schematic diagram illustrating a process of sending target interaction information according to an embodiment of the present disclosure;
FIG. 8 is a schematic diagram illustrating a process of sending target interaction information according to a further embodiment of the present disclosure;
FIG. 9 is a schematic diagram illustrating a process of sending target interaction information according to a yet further embodiment of the present disclosure;
FIG. 10 is a block diagram of an apparatus for sending interaction information according to an embodiment of the present disclosure; and
FIG. 11 is a schematic diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for illustrative purposes only and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "including" and variations thereof are open inclusions, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that "one or more" should be understood unless the context clearly indicates otherwise.

The names of messages or information exchanged between multiple devices in embodiments of the present disclosure are for illustrative purposes only and are not intended to limit the scope of such messages or information.

It can be understood that, before the technical solutions disclosed in the embodiments of the present disclosure are used, the types of personal information related to the present disclosure, the usage scope, the usage scenario and the like should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be displayed in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

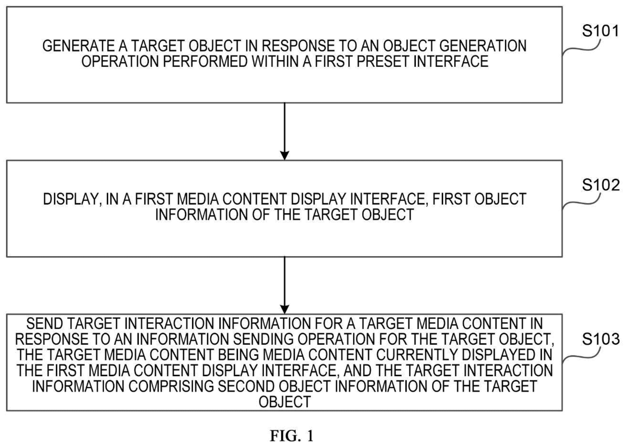

FIG. 1 is a schematic flowchart of a method for sending interaction information according to an embodiment of the present disclosure. The method may be performed by an apparatus for sending interaction information, where the apparatus may be implemented by software and/or hardware, may be configured in an electronic device, typically configured in a mobile phone or a tablet computer. The method for sending interaction information according to the embodiments of the present disclosure may be applicable to scenarios where interaction information is sent by using the generated object, and may be particularly applicable to scenarios where comment information is sent by using images obtained by screenshot. As shown in FIG. 1, the method for sending interaction information according to this embodiment may include the followings.

At block S101, a target object is generated in response to an object generation operation performed within a first preset interface.

The target object may be the generated object. For example, the target object may be an image object. As an example, the target object may include an image and/or a video. The image may include a static image and/or a dynamic image, etc. The object generation operation may be an operation indicating to generate a target object, and the manner of executing the object generation operation is not limited. Optionally, the object generation operation may include a screenshot operation.

The first preset interface may be an interface on which the object generation operation acts. Optionally, the first preset interface may be an interface in the current application associated with the scenario of sending interaction information of the media content, such as an interface suitable for sending the interaction information associated with the target object after the target object is generated. Optionally, the first preset interface includes at least one of the first media content display interface, a second media content display interface, an associated object display interface of the media content, or a search interface. The associated object display interface may be configured to display an object associated with interaction information of the media content.

The first media content display interface may be a media content display interface for subsequently presenting first object information of the target object, such as the media content display interface displayed after the target object is generated. The first preset interface for generating the target object and the first media content display interface for displaying the first object information of the target object may be the same interface. In other words, in the first media content display interface, the target object may be generated, and the first object information of the target object may be displayed. The media content display interface may be understood as an interface for displaying the media content. The type of the media content displayed in the media content display interface is not limited. For example, the media content display interface may be configured to display video content and/or graphic content, and the like.

The second media content display interface may be different from the first media content display interface. The associated object display interface of the media content may be an interface for displaying the object associated with the interaction information of the media content. For example, the object associated with the interaction information may be an object corresponding to the object information included in the interaction information, such as the video and/or the image. The search interface may be an interface for the current user to search for content.

In this embodiment, the first preset interface for generating the target object and the first media content display interface for displaying the first object information of the target object may be different interfaces, such as different interfaces in the same application (e.g., the current application). In this case, after the current user generates the target object by performing the object generation operation in the first preset interface and switches to the first media content display interface, the first object information of the generated target object may be displayed in the first media content display interface.

Specifically, when the object generation operation performed by the current user in the first preset interface is received, the target object may be generated and further stored, such that the current user may view and/or use it.

In this embodiment, the generation manner of the target object may be flexibly set. For example, the target object may be generated based on the interface content displayed in the first preset interface, such as generating images and/or videos whose frame content is at least part of the interface content displayed in the first preset interface. In this case, optionally, the target object may include the image and/or the video, and generating the target object includes generating the target object based on the interface content displayed in the first preset interface.

In some implementations, the object generation operation may include the screenshot operation, and generating the target object based on the interface content displayed in the first preset interface may include: capturing the interface content displayed in the target area of the first preset interface as screenshot content, and generating the target object based on the screenshot content.

The screenshot operation may serve as a trigger indicating to capture at least part of the interface content in the first preset interface to generate a new image. For example, the screenshot operation may serve as a trigger on a screenshot control, or a configured gesture performed within the first preset interface. The configured gesture may be, for example, a multi-finger sliding gesture or a sliding gesture along a preset trajectory. The target area may be screenshot area corresponding to the screenshot operation in the first preset interface, which may be preset or determined based on a setting operation or an adjustment operation of the current user on the screenshot area.

In the foregoing implementation manner, taking the screenshot scenario as an example, the object generation operation may be a screenshot operation. When the object generation operation performed within the first preset interface is received, the interface content displayed in the target area of the first preset interface may be captured as the screenshot content, and the target object may be generated based on the screenshot content. For example, the screenshot content may be used as the image content of the image, and the image corresponding to the screenshot content may be generated as the target object.

At block S102, first object information of the target object is displayed in a first media content display interface.

The first object information may be information associated with the target object. For example, the first object information may be prompt information for the target object, such as information configured to prompt the current user to send the interaction information based on the generated target object. Optionally, when the target object is an image object, the first object information may include a thumbnail of the target object, such that the current user may understand the frame displayed in the target object through the thumbnail.

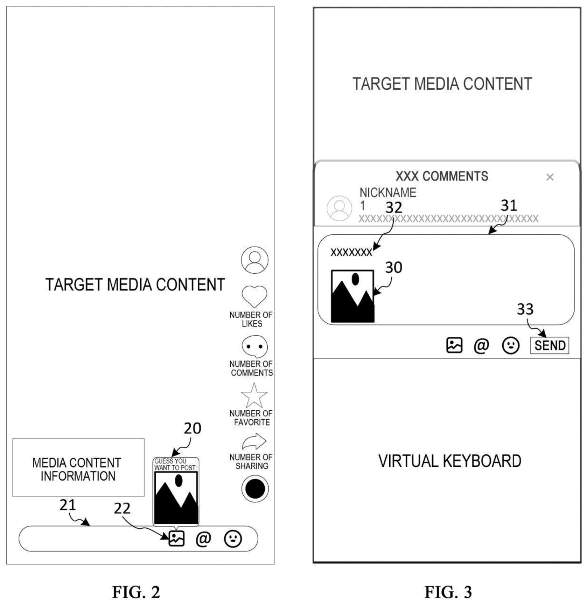

For example, as shown in FIG. 2 (in FIG. 2, first object information 20 of the target object is displayed in an area outside the media screen display area as an example), after the target object is generated, the first object information 20 of the target object may be displayed in the first media content display interface, to prompt the current user to send the interaction information for the media content displayed in the first media content display interface based on the generated target object.

In this embodiment, the display form and/or display position for displaying the first object information in the first media content display interface may be set as required.

For example, in the first media content display interface, the first object information of the target object may be displayed in the form of prompt information. As an example, in the first media content display interface, the first object information of the target object may be displayed in the form of a prompt bubble or a prompt window.

The first object information may be displayed outside the interaction information input area of the target media content. For example, when the first object information of the target object is displayed in the first media content display interface, the first object information may not be input into the interaction information input area of the target media content.

Optionally, as shown in FIG. 2, the first object information 20 may be displayed at the associated position of the preset interactive component 21 of the target media content. In other words, the first object information 20 of the target object may be displayed at the associated position of the preset interactive component 21 of the target media content currently displayed in the first media content display interface. For example, the first object information 20 of the target object may be displayed within a predetermined distance range of the preset interactive component 21.

The preset interactive component of the target media content may be an interaction component for the current user to generate and/or send the interaction information for the target media content. For example, the preset interactive component may be configured to trigger display of the interaction information input area of the target media content, such that the current user may input the information content of the interaction information for the target media content.

With continued reference to FIG. 2, in some optional implementations, the preset interactive component 21 may display an object sending control 22 configured to trigger displaying an object sending interface of the current user, such that the current user may select an object associated with the interaction information to be sent in the object sending interface. As an example, the target object is the image object (such as the image and/or video), the object sending interface may be configured to display an album of the current user, such as the local album of the current user. It may be understood that the local album of the user is displayed only upon receiving full authorization from the user. For example, the generated target object may be displayed in the object sending interface, and in this case, the first object information 20 may be displayed at a position associated with the object sending control 22, such as the position above the object sending control 22. Optionally, the preset interaction component 21 displays the object sending control 22 configured to trigger displaying an object sending interface of the current user, and the first object information 20 may be displayed at an associated position of the object sending control 22.

In some embodiments, it may not be considered whether the current condition satisfies the predetermined display condition of the first object information. In other words, no predetermined display condition may be set for the first object information. When the media content display interface (such as the first media content display interface) is displayed, the first object information of the latest generated target object may be displayed in the media content display interface.

In some further embodiments, it may be considered whether the current condition satisfies the predetermined display condition of the first object information. In other words, the predetermined display condition may be set for the first object information, and the first object information of the target object may be displayed in the first media content display interface only when the current condition satisfies the predetermined display condition of the first object information. If the current condition does not satisfy the predetermined display condition of the first object information, the first object information of the target object may be not displayed in the first media content display interface, to avoid excessive interference to the current user.

The predetermined display condition may be set as required. For example, the predetermined display condition may include the preset interactive component of the target media content being currently displayed in the first media content display interface and a duration between a current time and a generation time of the target object is less than a predetermined duration. In this case, the first object information of the target object may be displayed in the first media content display interface only within the predetermined duration after generation of the target object and when the preset interactive component of the target media content is displayed in the first media content display interface, such as displaying the first object information of the target object at the associated position of the preset interactive component. For example, the predetermined duration may be set to 10s, 30s, or 60s, etc., which is not limited in the embodiment.

In this case, optionally, displaying the first object information of the target object in the first media content display interface includes: displaying, in the first media content display interface, the first object information of the target object in response to a predetermined display condition being satisfied, where the predetermined display condition includes the preset interactive component being currently displayed and a duration between a current time and a generation time of the target object being less than a predetermined duration.

In the embodiment, the predetermined display condition may not include content related to the first preset interface for generating the target object. For example, it may not consider whether the first preset interface is an interface in the current application associated with the scene of sending interaction information of the media content. The first object information of the target object may be displayed in the first media content display interface as long as it is within the predetermined duration after the generation of the target object and the preset interactive component of the target media content is displayed in the first media content display interface.

Alternatively, the predetermined display condition may include content related to the first preset interface for generating the target object. For example, it may consider whether the first preset interface is the interface in the current application associated with the scene of sending interaction information of the media content. The first object information of the target object may be displayed in the first media content display interface only when it is within the predetermined duration after the generation of the target object, the preset interactive component of the target media content is displayed in the first media content display interface, and the first preset interface is an interface in the current application associated with the scene of sending interaction information of media content, so as to further improve the practicability of the displayed first object information. Here, the interface in the current application associated with the comment scene may include, for example, at least one of the first media content display interface, the second media content display interface, the associated object display interface of the media content, or the search interface.

In some implementations, the first preset interface and the first media content display interface may be different interfaces in the same application, and displaying in the first media content display interface the first object information of the target object may include: displaying the first media content display interface in response to an interface display operation for the first media content display interface, and displaying the first object information of the target object in the first media content display interface.

The interface display operation for the first media content display interface may serve as a trigger indicating to display the first media content display interface, such as a trigger for switching the current interface from the first preset interface or a further interface other than the first preset interface to the media content display interface. In this case, the media content display interface that is switched to may serve as the first media content display interface.

In the foregoing implementation, when the first preset interface and the first media content display interface are different interfaces in the current application, the first object information of the target object may be displayed in the first media content display interface only after receiving the interface presentation operation for the first media content display interface.

For example, after generating the target object, when receiving the interface display operation for the first media content display interface, the first media content display interface may be displayed, and the first object information of the target object may be displayed in the first media content display interface. For example, the first media content display interface may be displayed, the target media content may be displayed in the first media content display interface, and when the current condition satisfies the predetermined display condition of the first object information, the first object information of the target object may be displayed in the first media content display interface.

At block S103, target interaction information for a target media content is sent in response to an information sending operation for the target object, where the target media content is media content currently displayed in the first media content display interface, and the target interaction information includes second object information of the target object.

The information sending operation may serve as a trigger indicating to send target interaction information for the target media content. The manner of executing the information sending operation is not limited. Optionally, the information sending operation may performed on the first object information displayed in the first media content display interface and/or an information sending control. The target media content may be media content currently displayed in the first media content display interface.

The target interaction information may be interaction information associated with the target object, such as interaction information including second object information of the target object. The interaction information may include, for example, comment information and/or bullet comment information, etc. In the following, the comment information may be taken as an example of the interaction information for description. The information content of the target interaction information may include the second object information of the target object, or may further include information content other than the second object information of the target object, such as characters other than the second object information of the target object, and the like.

The second object information of the target object may be certain information of the target object, which may be the same as or different from the first object information of the target object. For example, the second object information of the target object may be configured to trigger the display of the target object. As an example, the second object information of the target object may include the thumbnail of the target object.

For example, when receiving the information sending operation for the target object, in response to the information sending operation, the target interaction information (including the second object information of the target object) for the target media content currently displayed in the first media content display interface may be sent.

In some implementations, prior to sending the target interaction information for the target media content in response to the information sending operation for the target object, the method may further include inputting, in response to an information input operation on the first object information, the second object information of the target object into an interaction information input area of the target media content. Sending the target interaction information for the target media content in response to the information sending operation for the target object may include determining, in response to a first information sending operation for the target object, content input into the interaction information input area as information content of the target interaction information, and sending the target interaction information for the target media content.

The information input operation may serve as a trigger indicating to input the second object information of the target object into the interaction information input area of the target media content. The information input operation may be performed on the first object information of the target object displayed in the first media content display interface. Optionally, the information input operation may include a click operation for the first object information. The interaction information input area of the target media content may be an area for inputting information content of the interaction information for the target media content. The first information sending operation may serve as a trigger indicating to use the content input in the interaction information input area as the information content of the interaction information and send the interaction information, such as an operation of triggering the information sending control.

In the foregoing implementation, when the information input operation performed within the first object information is received, the second object information of the target object may be input into the interaction information input area of the target media content, such that the user may edit in the information input area the information content of the interaction information to be sent.

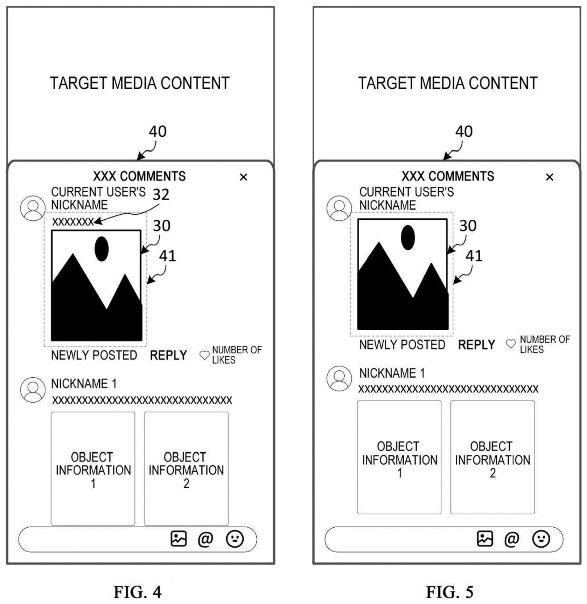

For example, as shown in FIG. 2, the first object information 20 of the target object is displayed in the first media content display interface, when the information input operation performed within the first object information 20 is received, for example, if it is detected that the current user clicks the first object information 20 displayed in the first media content display interface, the second object information 30 of the target object may be input into the interaction information input area 31 of the target media content, as shown in FIG. 3 (taking the second object information of the target object as the thumbnail of the target object as an example), such that the current user may continue to input new content 32 in the interaction information input area 31 or edit in the interaction information input area 31 the content input. When the first information sending operation for the target object is received, for example, if it is detected that the current user triggers the information sending control 33 associated with the interaction information input area 31 (as shown in FIG. 3), the content input in the interaction information input area 31 may be served as the information content of the target interaction information, the target interaction information may be sent as the interaction information of the target media content, and the target interaction information 41 may be further displayed in the interaction information panel 40 of the target media content, as shown in FIG. 4. In this case, the target interaction information 41 may include the second object information 30 of the target object. In addition, if the current user inputs new content 32 in the interaction information input area 31, the target interaction information may further include the new content 32 input by the current user.

In this embodiment, after inputting the second object information of the target object into the interaction information input area of the target media content, the current user may further be supported to preview and/or edit the target object. For example, when receiving the interface display operation for the target object, in response to the interface display operation, the second preset interface of the target object may be displayed, such that the current user may preview the target object and/or edit the target object in the second preset interface.

In this case, optionally, after inputting the second object information of the target object into the interaction information input area of the target media content, the method may further include: displaying a second preset interface of the target object in response to an interface display operation for the target object, the second preset interface being configured to preview and/or edit the target object.

The interface display operation for the target object may serve as a trigger indicating to display the second preset interface of the target object, such as an operation of triggering the second object information, input in the interaction information input area, of the target object. The second preset interface may be an interface for previewing and/or editing the target object. The manner in which the target object is previewed and/or edited in the second preset interface is not limited.

In some further embodiments, sending the target interaction information for the target media content in response to the information sending operation for the target object may include determining, in response to a second information sending operation on the first object information, the second object information of the target object as information content of the target interaction information, and sending the target interaction information for the target media content.

The second information sending operation may be a trigger indicating to use the second object information of the target object as the information content of the interaction information and send the interaction information. In this case, the information content of the interaction information may only include the second object information of the target object, and there is no need to perform the operation of inputting the second object information of the target object into the interaction information input area of the target content. The second information sending operation may be performed on the first object information of the target object displayed in the first media content display interface, and it may be a trigger different from the information input operation for the target object. For example, the second information sending operation may include a touch-and-hold operation or a drag-and-drop operation for the first object information. The touch-and-hold operation may be an action where the pressing duration is greater than a predetermined duration. The drag-and-drop operation may involve dragging the first object information, and the dragging direction may be either unrestricted or preconfigured.

In the foregoing implementation, when the second information sending operation performed within the first object information is received, the second object information of the target object may be directly used as the information content of the interaction information and send the interaction information, to simplify the operation required to send the interaction information associated with the target object.

For example, as shown in FIG. 2, the first object information 20 of the target object is displayed in the first media content display interface, when the second information sending operation performed within the first object information 20 is received, for example, if it is detected that the current user long-presses or drags the first object information 20 displayed in the first media content display interface, the second object information of the target object may be used as the information content of the target interaction information, the target interaction information may be sent as the interaction information of the target media content, and the target interaction information 41 may be further displayed in the interaction information panel 40 of the target media content, as shown in FIG. 5. In this case, the target interaction information 41 may only include the second object information 30 of the target object.

With the method for sending interaction information according to the embodiment, in response to an object generation operation performed within a first preset interface, the target object is generated in response to the object generation operation performed within the first preset interface, the first object information of the target object is displayed in the first media content display interface, and in response to the information sending operation for the target object, target interaction information for the target media content is sent. The target media content is media content currently displayed in the first media content display interface, and the target interaction information includes second object information of the target object. In the embodiment, with the above technical solution, the first object information of the generated target object is displayed in the media content display interface, and the user is supported to send the interaction information for the media content and associated with the target object based on the first object information. This may enrich the manner of sending the interaction information for the media content, and simplify the operations required for sending the interaction information for the media content.

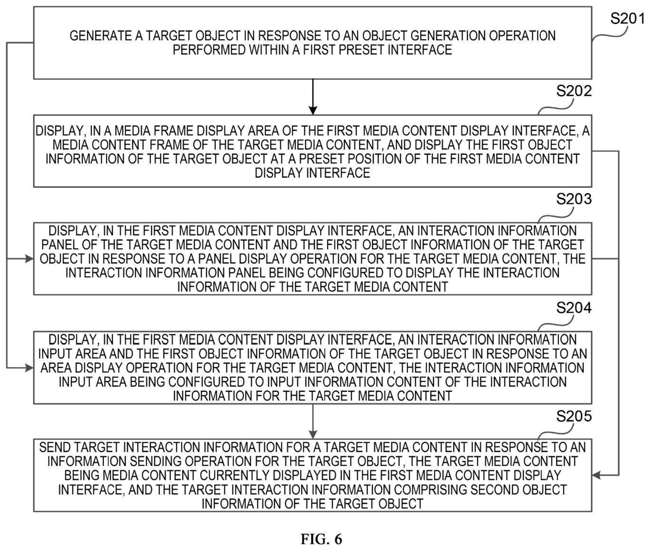

FIG. 6 is a schematic flowchart of a method for sending interaction information according to a further embodiment of the present disclosure. The solution in this embodiment may be combined with one or more optional solutions in the foregoing embodiments. Optionally, displaying in the first media content display interface the first object information of the target object includes at least one of: displaying, in a media frame display area of the first media content display interface, a media content frame of the target media content, and displaying the first object information of the target object at a predetermined position of the first media content display interface; displaying, in the first media content display interface, an interaction information panel of the target media content and the first object information of the target object in response to a panel display operation for the target media content, the interaction information panel being configured to display the interaction information of the target media content; or displaying, in the first media content display interface, an interaction information input area and the first object information of the target object in response to an area display operation for the target media content, the interaction information input area being configured to input information content of the interaction information for the target media content.

Correspondingly, as shown in FIG. 6, the method for sending interaction information according to this embodiment may include the followings.

At block S201, a target object is generated in response to an object generation operation performed within the first preset interface, and at least one of blocks S202 to S204 is performed.

At block S202, a media content frame of the target media content is displayed in a media frame display area of the first media content display interface, and first object information of the target object is displayed at a predetermined position of the first media content display interface, and block S205 is performed.

The media frame display area may be an area in the first media content display interface for displaying the media frame, such as the primary display area of the first media content display interface. The predetermined position may be the area in the first media content display interface for displaying the first object information of the target object, which may be set as needed. For example, the predetermined position may be the associated position of a preset interactive component displayed in the first media content display interface, and the preset interactive component may be displayed outside the media frame display area of the first media content display interface.

In this embodiment, the first object information of the target object may be displayed when the first media content display interface is displayed. For example, when the media content frame of the target media content is displayed in the media frame display area of the first media content display interface, the first object information of the target object may be displayed at the predetermined position of the first media content. In other words, in this case, the interaction information panel and/or the interaction information input area of the target media content may not be displayed in the first media content display interface, so as to simplify the operation required for the user to send the target interaction information associated with the target object based on the first object information.

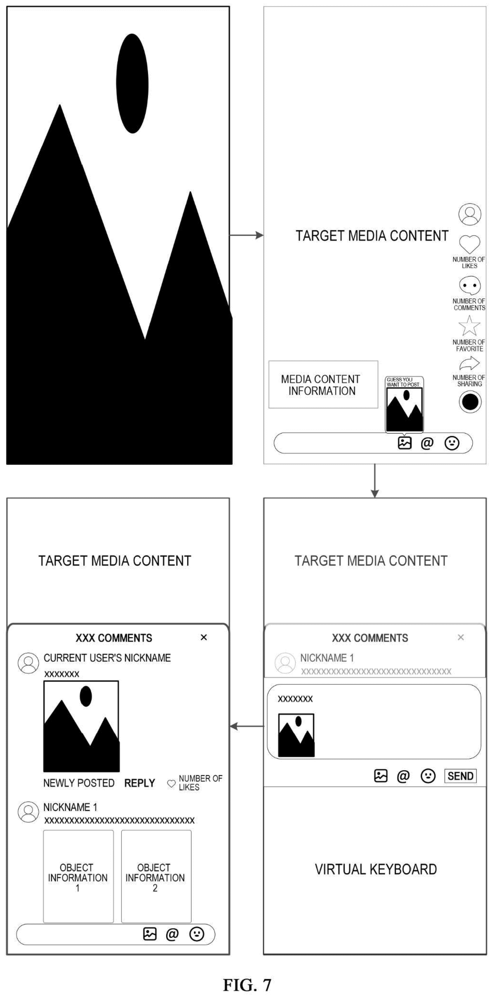

As an example, in the screenshot scenario, comment information (i.e., the target interaction information) is sent in response to the first information sending operation, in an optional implementation, a visible image control (i.e., the object sending control) may be displayed in the first media content display interface. In this case, after the user takes a screenshot, the object information of the first object may be directly displayed via the visible image control, guiding the user to post image comments associated with the screenshot (i.e., the target object). In this case, sending the target interaction information may include in response to receiving a screenshot operation (i.e., the object generation operation) performed within the first preset interface, generating the target object by capturing the interface content displayed in the first preset interface (as shown in the first figure in FIG. 7).

After the target object is generated, in the scenario where the image control of the target media content is displayed in the first media content display interface, when the first media content display interface is displayed, the media content frame of the target media content may be displayed in the media frame display area of the first media content display interface, the image control of the target media content may be displayed in the first media content display interface, and the first object information of the target object may be displayed at the associated position of the image control when the predetermined display condition is satisfied, as shown in the second figure in FIG. 7.

When it is detected that the current user clicks on the first object information, it is determined that an information input operation is received. In response to the information input operation, a comment information input area (i.e., the interaction information input area) of the target media content may be displayed, and second object information of the target object may be input into the comment information input area. For example, a comment information panel (i.e., the interaction information panel) of the target media content may be displayed, the comment information input area of the target media content may be displayed on the upper layer of the comment information panel, and the second object information of the target object may be input into the comment information input area, as shown in the third figure in FIG. 7.

When it is detected that the current user clicks the information sending control associated with the comment information input area, it is determined that the first information sending operation is received. In response to the first information sending operation, the content input in the comment information input area may be used as the information content of the comment information to be sent, the comment information is sent for the target media content, and the sent comment information may be displayed in the comment information panel of the target media content, as shown in the fourth figure in FIG. 7.

At block S203, in response to a panel display operation for the target media content, an interaction information panel of the target media content and the first object information of the target object are displayed in the first media content display interface, and block S205 is performed, where the interaction information panel is configured to display the interaction information of the target media content.

The panel display operation may serve as a trigger indicating to display the interaction information panel of the target media content, such as an operation for triggering the preset interactive control of the target media content. The interaction information panel may be configured to display interaction information of the target media content. For example, if the interaction information panel is a comment information panel, the panel display operation may include an operation for triggering a comment control of the target media content. The comment panel may be configured to display comment information of the target media content.

In this embodiment, the first object information of the target object may be displayed when the interaction information panel of the target media content is displayed.

Specifically, after the target object is generated, when the panel display operation for the target media content currently displayed in the first media content display interface is received, the interaction information panel of the target media content and the first object information of the target object may be displayed in the first media content display interface. For example, the interaction information panel of the target media content may be displayed in the first media display interface, and the first object information of the target object may be displayed in the interaction information panel.

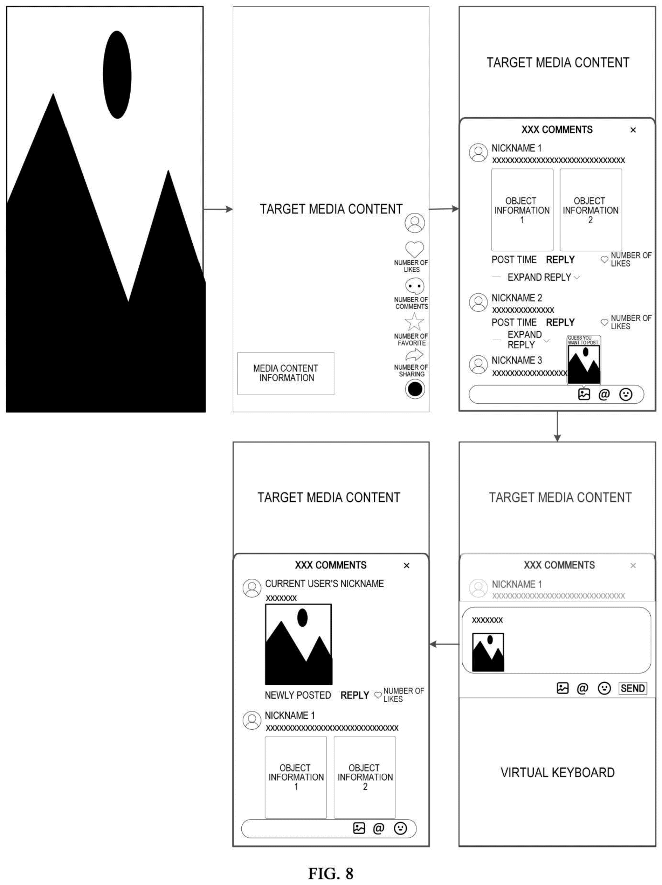

As an example, in the screenshot scenario, comment information (i.e., the target interaction information) is sent in response to the first information sending operation, in an optional implementation, after the user takes a screenshot in the first preset interface and opens the comment information panel (i.e., the interaction information panel) within the predetermined duration, the first object information of the target object may be displayed at the associated position of the image control (i.e., the object sending control) displayed in the comment information panel, guiding the user to post the obtained screenshot (i.e., the target object). After the user clicks the first object information, the second object information of the image may be automatically inserted into the comment information input area (i.e., the interaction information input area). In this case, sending the target interaction information may include in response to receiving the screenshot operation (i.e., the object generation operation) performed within the first preset interface, generating the target object by capturing the interface content displayed in the first preset interface (as shown in the first figure in FIG. 8).

As shown in the second figure in FIG. 8, after the target object is generated, when the first media content display interface is displayed, the media content frame of the target media content may be displayed in the first media content display interface,.

When it is detected that the current user performs the panel display operation for the comment information panel of the target media content, for example, when it is detected that the current user triggers the comment control of the target media content, the comment information panel of the target media content may be displayed in the first media content display interface. At least part of the comment information of the target media content and the image control may be displayed in the comment panel, and the first object information of the target object may be displayed at the associated position of the image control when the predetermined display condition is satisfied, as shown in the third figure in FIG. 8.

When it is detected that the current user clicks on the first object information, it is determined that an information input operation is received. In response to the information input operation, the comment information input area of the target media content may be displayed, and second object information of the target object may be input into the comment information input area. For example, the comment information input area of the target media content may be displayed on the upper layer of the comment information panel, and the second object information of the target object may be input into the comment information input area, as shown in the fourth figure in FIG. 8.

When it is detected that the current user clicks the information sending control associated with the comment information input area, it is determined that the first information sending operation is received. In response to the first information sending operation, the content input in the comment information input area may be used as the information content of the comment information to be sent, the comment information may be sent for the target media content, and the sent comment information may be displayed in the comment information panel of the target media content, as shown in the fifth figure in FIG. 8.

At block S204, in response to an area display operation for the target media content, an interaction information input area and the first object information of the target object are displayed in the first media content display interface, and block S205 is performed, where the interaction information input area is configured to input information content of the interaction information for the target media content.

The area display operation may serve as a trigger indicating to display the interaction information input area of the target media content, and the execution manner of the area display operation is not limited. Optionally, the area display operation acts on the preset interactive component of the target media content, and the preset interactive component is displayed in the area other than the media frame display area in the media content display interface or displayed within the interaction information panel. For example, the area display operation may be an operation of triggering a preset interactive component displayed in an area outside the media frame display area of the media content display interface, or an operation of triggering the preset interactive component displayed in the interaction information panel of the target media content. Hereinafter, the area display operation is taken as an example of the operation of triggering the preset interactive component displayed in the interaction information panel for description.

In this embodiment, the first object information of the target object may also be displayed when the interaction information input area of the target media content is displayed.

Specifically, after the target object is generated, when an area display operation for the target media content currently displayed in the first media content display interface is received, the interaction information input area of the target media content and the first object information of the target object may be displayed in the first media content display interface. For example, the interaction information input area of the target media content and the object sending control may be displayed in the first media display interface, and the first object information of the target object may be displayed at the associated position of the object sending control.

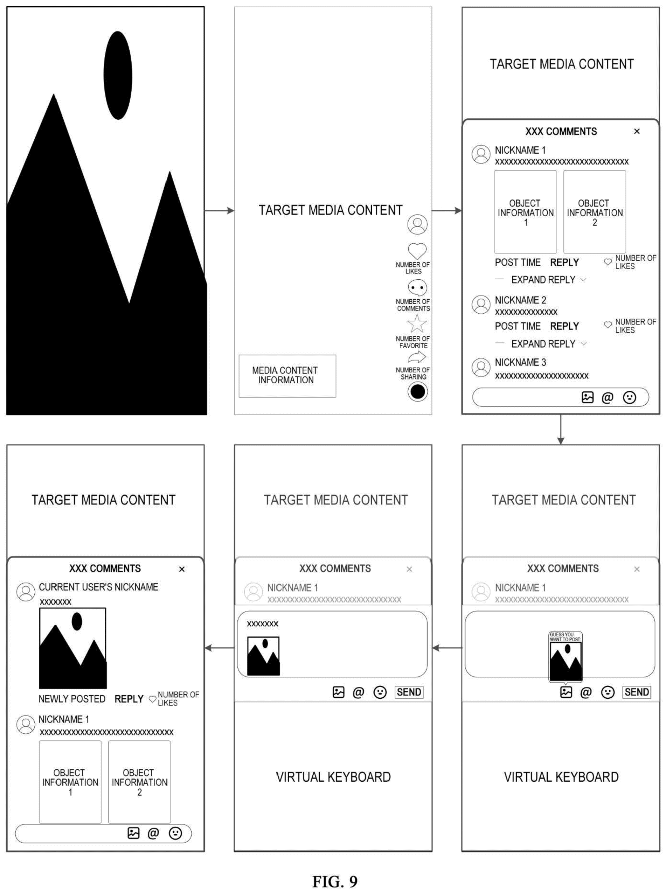

As an example, in the screenshot scenario, comment information (i.e., the target interaction information) is sent in response to the first information sending operation, in an optional implementation, after the user takes a screenshot in the first preset interface, opens the comment information panel (i.e., the interaction information panel) and activates the comment information input area (i.e., interaction information input area) within the predetermined duration, the first object information of the target object may be displayed at the position of the image control (i.e., the object sending control) associated with the comment information input area, guiding the user to post the obtained screenshot (i.e., the target object). After the user clicks the first object information, the second object information of the image may be automatically inserted into the comment information input area (i.e., the interaction information input area). In this case, sending the target interaction information may include in response to receiving a screenshot operation (i.e., the object generation operation) performed within the first preset interface, generating the target object screenshot by capturing the interface content displayed in the first preset interface (as shown in the first figure in FIG. 9).

As shown in the second figure in FIG. 9, after the target object is generated, when the first media content display interface is displayed, the media content frame of the target media content may be displayed in the first media content display interface.

When it is detected that the current user performs the panel display operation for the comment information panel of the target media content, for example, when it is detected that the current user triggers the comment control of the target media content, the comment information panel of the target media content may be displayed in the first media content display interface. At least part of the comment information of the target media content and the preset interactive component may be displayed in the comment panel, as shown in the third figure in FIG. 9.

When it is detected that the current user triggers the preset interactive component displayed in the comment information panel, it is determined that an area display operation for the target media content is received. In response to the area display operation, the comment information input area and the image control of the target media content may be displayed in the first media content display interface. For example, the comment information input area of the target media content and the image control may be displayed on the upper layer of the comment information panel, and the first object information of the target object may be displayed at the associated position of the image control when the predetermined display condition is satisfied, as shown in the fourth figure in FIG. 9.

When it is detected that the current user clicks on the first object information, it is determined that an information input operation is received. In response to the information input operation, the second object information of the target object may be input into the comment information input area, as shown in the fifth figure in FIG. 9.

When it is detected that the current user clicks the information sending control associated with the comment information input area, it is determined that the first information sending operation is received. In response to the first information sending operation, the content input in the comment information input area may be used as the information content of the comment information to be sent, the comment information may be sent for the target media content, and the sent comment information may be displayed in the comment information panel of the target media content, as shown in the sixth figure in FIG. 9.

At block S205, target interaction information for a target media content is sent in response to an information sending operation for the target object, where the target media content is media content currently displayed in the first media content display interface, and the target interaction information includes second object information of the target object.

With the method for sending interaction information according to the embodiment, the manner of displaying the first object information of the generated target object, and the manner of sending the interaction information for the media content, and simplify the operations required for sending the interaction information for the media content and associated with the target object may be enriched, and the user experience of sending interaction information may be improved.

With the method and apparatus for sending interaction information, the electronic device and the storage medium according to embodiments of the present disclosure, the target object is generated in response to the object generation operation performed within the first preset interface, the first object information of the target object is displayed in the first media content display interface, and in response to the information sending operation for the target object, target interaction information for the target media content is sent. The target media content is media content currently displayed in the first media content display interface, and the target interaction information includes second object information of the target object. In the embodiment, with the above technical solution, the first object information of the generated target object is displayed in the media content display interface, and the user is supported to send the interaction information for the media content and associated with the target object based on the first object information. This may enrich the manner of sending the interaction information for the media content, and simplify the operations required for sending the interaction information for the media content.

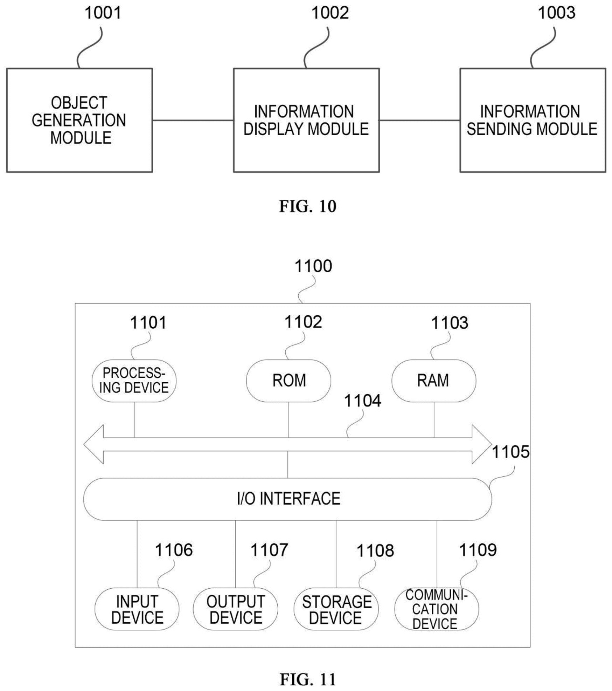

FIG. 10 is a block diagram of an apparatus for sending interaction information according to an embodiment of the present disclosure. The apparatus may be implemented by software and/or hardware, and may be configured in an electronic device, and typically, may be configured in a mobile phone or a tablet computer. The apparatus may send interaction information by using the generated object by performing the method for sending interaction information, such as sending comment information by using the image obtained by screenshot. As shown in FIG. 10, the apparatus for sending interaction information according to this embodiment may include an object generation module 1001, an information display module 1002, and an information sending module 1003. The object generation module 1001 is configured to generate a target object in response to an object generation operation performed within the first preset interface. The information display module 1002 is configured to display, in a first media content display interface, first object information of the target object. The information sending module 1003 is configured to send target interaction information for a target media content in response to an information sending operation for the target object. The target media content is media content currently displayed in the first media content display interface, and the target interaction information includes second object information of the target object.

With the apparatus for sending interaction information according to this embodiment, the object generation module generates the target object in response to the object generation operation performed within the first preset interface, the information display module displays in the first media content display interface the first object information of the target object, and the information sending module sends the target interaction information for the target media content in response to the information sending operation for the target object. The target media content is media content currently displayed in the first media content display interface, and the target interaction information includes second object information of the target object. In the embodiment, with the above technical solution, the first object information of the generated target object is displayed in the media content display interface, and the user is supported to send the interaction information for the media content and associated with the target object based on the first object information. This may enrich the manner of sending the interaction information for the media content, and simplify the operations required for sending the interaction information for the media content.

In the above solution, the information display module 1002 may include at least one of: a first information display unit configured to display, in a media frame display area of the first media content display interface, a media content frame of the target media content, and display the first object information of the target object at a predetermined position of the first media content display interface; a second information display unit configured to display, in the first media content display interface, an interaction information panel of the target media content and the first object information of the target object in response to a panel display operation for the target media content, the interaction information panel being configured to display the interaction information of the target media content; and a third information presentation unit configured to display, in the first media content display interface, an interaction information input area and the first object information of the target object in response to an area display operation for the target media content, the interaction information input area being configured to input information content of the interaction information for the target media content.

In the above solution, the area display operation is performed on a preset interactive component of the target media content, the preset interactive component being displayed in an area outside the media frame display area in the media content display interface or within the interaction information panel.

Furthermore, the apparatus for sending interaction information according to this embodiment may further include: an information input module configured to prior to sending the target interaction information for the target media content in response to the information sending operation for the target object, input, in response to an information input operation on the first object information, the second object information of the target object into an interaction information input area of the target media content. The information sending module 1003 may be configured to: determine, in response to a first information sending operation for the target object, content input into the interaction information input area as information content of the target interaction information, and sending the target interaction information for the target media content.

Furthermore, the apparatus for sending interaction information according to this embodiment may further include: an interface display module configured to after inputting the second object information of the target object into the interaction information input area of the target media content, display a second preset interface of the target object in response to an interface display operation for the target object, where the second preset interface is configured to preview and/or edit the target object.

In the above solution, the information sending module 1003 may be configured to: determine, in response to a second information sending operation on the first object information, the second object information of the target object as information content of the target interaction information, and sending the target interaction information for the target media content.

In the above solution, the information input operation includes a click operation for the first object information; and/or the second information sending operation includes a touch-and-hold operation or a drag-and-drop operation for the first object information.

In the above solution, the first object information is displayed at an associated position of a preset interactive component of the target media content.

In the above solution, the preset interactive component displays an object sending control configured to trigger displaying an object sending interface of a current user, and the first object information is displayed at an associated position of the object sending control.

In the above solution, the information display module 1002 may be configured to display, in the first media content display interface, the first object information of the target object in response to a predetermined display condition being satisfied, the predetermined display condition including the preset interactive component being currently displayed and a duration between a current time and a generation time of the target object being less than a predetermined duration.

In the above solution, the target object may include an image and/or a video, and the object generation module 1001 may be configured to generate the target object based on the interface content displayed in the first preset interface.

In the above solution, the object generation operation may include a screenshot operation, and the object generation module 1001 may be configured to capture the interface content displayed in the target area of the first preset interface as screenshot content, and generate the target object based on the screenshot content.

In the above solution, the first preset interface includes at least one of the first media content display interface, a second media content display interface, an associated object display interface of the media content, or a search interface, and the associated object display interface is configured to display an object associated with interaction information of the media content.

In the above solution, the first preset interface and the first media content display interface may be different interfaces in a same application, and the information display module 1002 may be configured to display the first media content display interface in response to an interface display operation for the first media content display interface, and displaying the first object information of the target object in the first media content display interface.

The apparatus for sending interaction information according to embodiments of the present disclosure may perform the method for sending interaction information according to any embodiment of the present disclosure, and has functional modules and beneficial effects corresponding to the method for sending interaction information. For technical details not described in detail in this embodiment, reference may be made to the method for sending interaction information according to any embodiment of the present disclosure.

FIG. 11 is a schematic structural diagram of an electronic device (for example, a terminal device) 1100 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 11 is merely an example, and should not impose any limitation on the functions and scope of use of the embodiments of the present disclosure.

As shown in FIG. 11, the electronic device 1100 may include a processing device (for example, a central processing unit, a graphics processor, etc.) 1101, which may perform various appropriate actions and processing according to a program stored in a read-only memory (ROM) 1102 or a program loaded into a random access memory (RAM) 1103 from a storage device 1108. In the RAM 1103, various programs and data required by the operation of the electronic device 1100 are also stored. The processing device 1101, the ROM 1102, and the RAM 1103 are connected to each other through a bus 1104. Input/output (I/O) interface 1105 is also connected to bus 1104.

Generally, the following devices may be connected to the I/O interface 1105: an input device 1106 including, for example, a touch screen, a touchpad, a keyboard, a mouse, a camera, a microphone, an accelerometer, a gyroscope, etc.; an output device 1107 including, for example, a liquid crystal display (LCD), a speaker, a vibrator, etc.; a storage device 1108 including, for example, a magnetic tape, a hard disk, etc.; and a communication device 1109. The communication device 1109 may allow the electronic device 1100 to communicate wirelessly or wired with other devices to exchange data. While FIG. 11 shows an electronic device 1100 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a non-transitory computer readable medium, the computer program including program code for performing the method shown in the flowchart. In such embodiments, the computer program may be downloaded and installed from the network through the communication device 1109, or installed from the storage device 1108, or from the ROM 1102. When the computer program is executed by the processing apparatus 1101, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to, wires, optical cables, RF (radio frequency), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: generate a target object in response to an object generation operation performed within a first preset interface; display first object information of the target object in a first media content display interface; and in response to an information sending operation for the target object, send target interaction information for the target media content, where the target media content is media content currently displayed in the first media content display interface, and the target interaction information includes second object information of the target object.

Computer program code for performing the operations of the present disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the module does not constitute a limitation on the unit itself in some cases.

The functions described above may be performed, at least in part, by one or more hardware logic components. For example, without limitation, example types of hardware logic components that may be used include field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, example 1 provides a method for sending interaction information, including: generating a target object in response to an object generation operation performed within a first preset interface; displaying, in a first media content display interface, first object information of the target object; and sending target interaction information for a target media content in response to an information sending operation for the target object, where the target media content is media content currently displayed in the first media content display interface, and the target interaction information includes second object information of the target object.

According to one or more embodiments of the present disclosure, example 2 is according to the method of example 1, displaying in the first media content display interface the first object information of the target object includes at least one of: displaying, in a media frame display area of the first media content display interface, a media content frame of the target media content, and displaying the first object information of the target object at a predetermined position of the first media content display interface; displaying, in the first media content display interface, an interaction information panel of the target media content and the first object information of the target object in response to a panel display operation for the target media content, the interaction information panel being configured to display the interaction information of the target media content; or displaying, in the first media content display interface, an interaction information input area and the first object information of the target object in response to an area display operation for the target media content, the interaction information input area being configured to input information content of the interaction information for the target media content.

According to one or more embodiments of the present disclosure, example 3 is according to the method of example 2, the area display operation is performed on a preset interactive component of the target media content, the preset interactive component being displayed in an area outside the media frame display area in the media content display interface or within the interaction information panel.

According to one or more embodiments of the present disclosure, example 4 is according to the method of example 1, prior to sending the target interaction information for the target media content in response to the information sending operation for the target object, the method further includes: inputting, in response to an information input operation on the first object information, the second object information of the target object into an interaction information input area of the target media content; sending the target interaction information for the target media content in response to the information sending operation for the target object includes: determining, in response to a first information sending operation for the target object, content input into the interaction information input area as information content of the target interaction information, and sending the target interaction information for the target media content.

According to one or more embodiments of the present disclosure, example 5 is according to the method of example 4, after inputting the second object information of the target object into the interaction information input area of the target media content, the method further includes: displaying a second preset interface of the target object in response to an interface display operation for the target object, where the second preset interface is configured to preview and/or edit the target object.

According to one or more embodiments of the present disclosure, example 6 is according to the method of example 1, sending the target interaction information for the target media content in response to the information sending operation for the target object includes: determining, in response to a second information sending operation on the first object information, the second object information of the target object as information content of the target interaction information, and sending the target interaction information for the target media content.

According to one or more embodiments of the present disclosure, example 7 is according to the method of any of examples 4 to 6, the information input operation includes a click operation for the first object information; and/or the second information sending operation includes a touch-and-hold operation or a drag-and-drop operation for the first object information.

According to one or more embodiments of the present disclosure, example 8 is according to the method of any of examples 1 to 6, the first object information is displayed at an associated position of a preset interactive component of the target media content.

According to one or more embodiments of the present disclosure, example 9 is according to the method of example 8, the preset interactive component displays an object sending control configured to trigger displaying an object sending interface of a current user, and the first object information is displayed at an associated position of the object sending control.

According to one or more embodiments of the present disclosure, example 10 is according to the method of example 8, displaying in the first media content display interface the first object information of the target object includes: displaying, in the first media content display interface, the first object information of the target object in response to a predetermined display condition being satisfied, the predetermined display condition including the preset interactive component being currently displayed and a duration between a current time and a generation time of the target object being less than a predetermined duration.

According to one or more embodiments of the present disclosure, example 11 is according to the method of any of examples 1 to 6, the target object includes an image and/or a video, and generating the target object includes: generating the target object based on interface content displayed in the first preset interface.

According to one or more embodiments of the present disclosure, example 12 is according to the method of example 11, the object generation operation includes a screenshot operation, and generating the target object based on the interface content displayed in the first preset interface includes: capturing the interface content displayed in the target area of the first preset interface as screenshot content, and generating the target object based on the screenshot content.

According to one or more embodiments of the present disclosure, example 13 is according to the method of any of examples 1 to 6, the first preset interface includes at least one of the first media content display interface, a second media content display interface, an associated object display interface of the media content, or a search interface, and the associated object display interface is configured to display an object associated with interaction information of the media content.

According to one or more embodiments of the present disclosure, example 14 is according to the method of example 13, the first preset interface and the first media content display interface are different interfaces in a same application, and displaying in the first media content display interface the first object information of the target object includes: displaying the first media content display interface in response to an interface display operation for the first media content display interface, and displaying the first object information of the target object in the first media content display interface.

According to one or more embodiments of the present disclosure, example 15 provides an apparatus for sending interaction information, including: an object generation module configured to generate a target object in response to an object generation operation performed within a first preset interface; an information display module configured to display, in a first media content display interface, first object information of the target object; and an information sending module configured to send target interaction information for a target media content in response to an information sending operation for the target object, the target media content being media content currently displayed in the first media content display interface, and the target interaction information including second object information of the target object.

According to one or more embodiments of the present disclosure, example 16 provides an electronic device, including: one or more processors; a memory configured to store one or more programs, where the one or more programs, when executed by the one or more processors, causing the one or more processors to perform the method for sending interaction information according to any of examples 1 to 14.

According to one or more embodiments of the present disclosure, example 17 provides a computer-readable storage medium having a computer program stored thereon, where the program, when executed by a processor, causing the method for sending interaction information according to any of examples 1to 14 to be performed.

The above description is merely preferred embodiments of the present disclosure and an explanation of the applied technical principles. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for sending interaction information, comprising:
generating a target object in response to an object generation operation performed within a first preset interface;
displaying, in a first media content display interface, first object information of the target object; and
sending target interaction information for target media content in response to an information sending operation for the target object, wherein the target media content is media content currently displayed in the first media content display interface, and wherein the target interaction information comprises second object information of the target object.

2. The method of claim 1, wherein displaying in the first media content display interface the first object information of the target object comprises at least one of:
displaying, in a media frame display area of the first media content display interface, a media content frame of the target media content, and displaying the first object information of the target object at a predetermined position of the first media content display interface;
displaying, in the first media content display interface, an interaction information panel of the target media content and the first object information of the target object in response to a panel display operation for the target media content, the interaction information panel being configured to display the interaction information of the target media content;
displaying, in the first media content display interface, an interaction information input area and the first object information of the target object in response to an area display operation for the target media content, the interaction information input area being configured to input information content of the interaction information for the target media content.

3. The method of claim 2, wherein the area display operation is performed on a preset interactive component of the target media content, the preset interactive component being displayed in an area outside the media frame display area in the media content display interface or within the interaction information panel.

4. The method of claim 1, wherein sending the target interaction information for the target media content in response to the information sending operation for the target object comprises:
inputting, in response to an information input operation on the first object information, the second object information of the target object into an interaction information input area of the target media content; and
using, in response to a first information sending operation for the target object, content input into the interaction information input area as information content of the target interaction information, and sending the target interaction information for the target media content.

5. The method of claim 4, wherein after inputting the second object information of the target object into the interaction information input area of the target media content, the method further comprises:
displaying a second preset interface of the target object in response to an interface display operation for the target object, the second preset interface being configured to preview and/or edit the target object.

6. The method of claim 1, wherein sending the target interaction information for the target media content in response to the information sending operation for the target object comprises:
using, in response to a second information sending operation on the first object information, the second object information of the target object as information content of the target interaction information, and sending the target interaction information for the target media content.

7. The method of any of claims 4 to 6, wherein the information input operation comprises a click operation for the first object information; and/or the second information sending operation comprises a touch-and-hold operation or a drag-and-drop operation for the first object information.

8. The method of any of claims 1 to 6, wherein the first object information is displayed at an associated position of a preset interactive component of the target media content.

9. The method of claim 8, wherein the preset interactive component displays an object sending control configured to trigger displaying an object sending interface of a current user, and the first object information is displayed at an associated position of the object sending control.

10. The method of claim 8, wherein displaying in the first media content display interface the first object information of the target object comprises:
displaying, in the first media content display interface, the first object information of the target object in response to a predetermined display condition being satisfied, the predetermined display condition comprising the preset interactive component being currently displayed and a duration between a current time and a generation time of the target object being less than a predetermined duration.

11. The method of any of claims 1 to 6, wherein the target object comprises an image and/or a video, and generating the target object comprises:
generating the target object based on interface content displayed in the first preset interface.

12. The method of claim 11, wherein the object generation operation comprises a screenshot operation, and generating the target object based on the interface content displayed in the first preset interface comprises:
capturing the interface content displayed in the target area of the first preset interface as screenshot content, and generating the target object based on the screenshot content.

13. The method of any of claims 1 to 6, wherein the first preset interface comprises at least one of the first media content display interface, a second media content display interface, an associated object display interface of the media content, or a search interface, and wherein the associated object display interface is configured to display an object associated with interaction information of the media content.

14. The method of claim 13, wherein the first preset interface and the first media content display interface are different interfaces in the same application, and displaying in the first media content display interface the first object information of the target object comprises:
displaying the first media content display interface in response to an interface display operation for the first media content display interface, and displaying the first object information of the target object in the first media content display interface.

15. An apparatus for sending interaction information, comprising:
an object generation module configured to generate a target object in response to an object generation operation performed within a first preset interface;
an information display module configured to display, in a first media content display interface, first object information of the target object;
an information sending module configured to send target interaction information for target media content in response to an information sending operation for the target object, wherein the target media content is media content currently displayed in the first media content display interface, and wherein the target interaction information comprises second object information of the target object.

16. An electronic device, comprising:
at least one processor; and
a memory communicatively connected to the at least one processor;
the memory storing a computer program executable by the at least one processor, and the computer program, when executed by the at least one processor, causes the at least one processor to perform the method for sending interaction information of any of claims 1 to 14.

17. A computer-readable storage medium, storing computer instructions, wherein the computer instructions, when executed by a processor, perform the method for sending interaction information of any of claims 1 to 14.
